# EUROPÄISCHE PATENTSCHRIFT

(11) **EP 0 679 600 B1**
(45) Veröffentlichungstag und Bekanntmachung des Hinweises auf die Patenterteilung: **28.11.2001**
(21) Anmeldenummer: 95106179.5
(22) Anmeldetag: 26.04.1995
(51) Int. Cl.: B65H 75/36

(54) **Elektrogerät**
Electrical appliance
Appareil électrique

(30) Priorität: 28.04.1994 DE 4414820
(43) Veröffentlichungstag der Anmeldung: 02.11.1995
(73) Patentinhaber: VORWERK & CO. INTERHOLDING GmbH, 42275 Wuppertal (DE)
(72) Erfinder: Dörner, Stefan, D-42697 Solingen (DE); Kemker, Uwe, D-42105 Wuppertal (DE)
(74) Vertreter: Müller, Enno, Dipl.-Ing.

(56) Entgegenhaltungen:
- US-A- 2 340 440
- PATENT ABSTRACTS OF JAPAN vol. 9, no. 114 (M-380) [1837] , 18.Mai 1985 & JP 60 002571 A (SUMITOMO GOMU KOGYO K.K.)

## Beschreibung

Die Erfindung betrifft ein Elektrogerät, bspw. eine Küchenmaschine, mit einem Anschlußkabel und einer Kabelaufnahme, gemäß dem Oberbegriff der Auspruchs 1. Ein solches Gerät ist aus der US-A-2 340 440 bekannt.

Derartige Elektrogeräte sind in vielfältiger Hinsicht bekannt. Bspw. in Form von Küchenmaschinen, Staubsauger usw.

Für das Anschlußkabel ist es bei solchen Geräten weiter bekannt, dieses äußerlich an dem Gerät in einer nutartigen Aufnahme, evtl. durch einzelne Haken gebildet, von Hand aufzuwickeln. Darüber hinaus ist auch bereits bekannt, das Anschlußkabel auf einer Trommel innerhalb des Gerätes aufzuwickeln. Bpsw. kann die Trommel eine Federvorspannung aufweisen oder auch elektrisch tätigbar sein.

Das technische Problem vorliegender Erfindung wird darin gesehen, bei einem Elektrogerät, wie es vorstehend angesprochen ist, eine Kabelaufnahme auszubilden, die von der konstruktiven Gestaltung her einfach ist und möglichst auch wirkungsvoll selbst bei Anordnung innerhalb des Gerätes mittels einer Handbetätigung benutzbar ist.

Dieses Problem ist zunächst und im wesentlichen beim Gegenstand des Anspruches 1 gelöst, wobei darauf abgestellt ist, daß die Kabelaufnahme einen scheibenartigen Hohlraum aufweist, mit einer Tiefe, die geringer ist als ein zweifacher Durchmesser des aufzunehmenden Kabels. Erfindungsgemäß ist erkannt worden, daß bei einer derartigen Gestaltung des Aufnahmeraumes als scheibenartigen Hohlraum, d.h. als Hohlraum größerer Flächenausdehnung jedoch geringer Tiefe, und mit einer im wesentlichen zentralen Öffnung zu diesem Hohlraum, ein Einschieben und Herausziehen des Kabels durchgeführt werden kann, wobei sich das Kabel von selbst innerhalb des Hohlraumes spiralförmig anordnet. Das Kabel wird hierbei in einer einlagigen flachen Spiralform in dem Hohlraum aufgewickelt. Nach einem vollständigen Herausziehen des Kabels legt sich bei einem Zurückbewegen des Kabels in den Hohlraum die zunächst eingeschobene Kabellänge als äußerste Windung an einen schmalseitigen Rand des Hohlraumes an und die weiter eingeschobene Kabellänge legt sich dann zunehmend nach innen spiralförmig an, bis der Hohlraum bis in den Bereich der Öffnung gefüllt ist. Geeigneterweise ist die Kabellänge hierauf abgestellt. In vorteilhafter Ausgestaltung ist vorgesehen, daß in der Kabelaufnahme, zugeordnet zu der Öffnung, ein kegelartiger Führungsstumpf ausgebildet ist. Dieser kegelartige Führungsstumpf, welcher an der der Öffnung gegenüberliegenden Fläche der Kabelaufnahme bevorzugt angeformt ist, unterstützt die angesprochene spiralförmige Verteilung der Kabellänge in vorteilhafter Weise. Im einzelnen empfiehlt es sich auch, den Führungsstumpf kegelstumpfartig auszubilden. Wenn auch im Rahmen der Erfindung ein Herausziehen und Einschieben des Kabels von Hand in die Kabelaufnahme im Vordergrund steht, so ist es doch möglich, daß dieser Vorgang maschinell erfolgt. Bspw. durch ein Walzenpaar, zwischen welchen das Kabel durchgeführt wird, im Bereich der Öffnung. Die Öffnung würde hierbei durch den Walzenspalt gebildet oder der Walzenspalt wäre zugeordnet zu dieser Öffnung - bevorzugt außerhalb des Hohlraums der Kabelaufnahme - angeordnet. In einer bevorzugten Ausgestaltung ist vorgesehen, daß die Öffnung zu dem Führungsstumpf versetzt ist. Das Kabel trifft hierdurch bedingt bei einem Einschieben in die Kabelbaufnahme dezentral auf den Kegelstumpf. Hieraus ergibt sich der wesentliche Vorteil, daß eine definierte Einschubrichtung vorgegeben ist, dies vor allem bei einem Einschieben eines gänzlich aus der Kabelaufnahme herausgezogenen Kabels. Die erste Windung wird demnach stets in gleiche Richtung verlaufend gebildet, was eine geordnete Spiralanordnung des Kabels zur Folge hat. Vorteilhafterweise ist vorgesehen, daß ein Maß der Versetzung etwa einem halben Kabeldurchmesser entspricht. In einer bevorzugten Ausgestaltung beträgt das Maß etwa 2 bis 3 mm. In weiterer Einzelheit ist vorgesehen, daß die Kabelaufnahme an einem schmalseitigen Randbereich eine Durchlaßöffnung zur Durchführung des Kabels in das Maschineninnere aufweist. Diese Durchlaßöffnung ist geeigneterweise labyrinthartig ausgebildet, vorzugsweise über jedenfalls eine Windung, um so als Zugentlastung zu dienen. Bei einer dezentralen Anordnung der Öffnung ist des weiteren vorgesehen, daß die Versetzung zu der Seite des schmalseitigen Randbereiches ausgebildet ist. Diese Ausgestaltung unterstützt in einfacher Weise eine stets geordnete Aufwicklung des Kabels. Dies derart, daß ausgehend von dem einen Durchbruch zur Durchführung des Kabels in das Maschineninnere aufweisenden schmalseitigen Randbereich ein Anlegen des Kabels in der Verlängerung dieses Randbereiches erfolgt. Unabhängig davon, in welchem Winkel das Kabel durch Öffnung geschoben wird, wird das Kabel, ausgehend von der labyrinthartigen Durchlaßöffnung, stets weich umgelenkt, zur Bildung einer Spirale. In konstruktiver Hinsicht empfiehlt es sich, die Kabelaufnahme aus einem an einer Breitseite offenen, topfartigen Gehäuse auszubilden, das im Einbauzustand durch ein Deckelteil, bevorzugt eine Gehäusewand des Gerätes, abgedeckt ist. In der Gehäusewand des Gerätes ist dann die weiter oben angesprochene Öffnung zur Entnahme bzw. Einführung des Kabels in die Kabelaufnahme ausgebildet. Der Hohlraum der Kabelaufnahme kann eine runde Grundrißfläche oder aber auch eine ovale Grundrißfläche bzw. Umfangsbegrenzung aufweisen. Bei einer Ausführung, wie sie hier bevorzugt beschrieben ist, ohne eine motorische Einrichtung, ergibt sich vorteilhaft, daß eine spiralartige Aufwicklung des Kabels in der Kabelaufnahme durchführbar ist, ohne daß bewegliche Teile an der Kabelaufnahme ausgebildet sind.

Nachstehend ist die Erfindung des weiteren anhand der beigefügten Zeichnung, die jedoch lediglich Ausführungsbeispiele darstellt, erläutert. Hierbei zeigt:

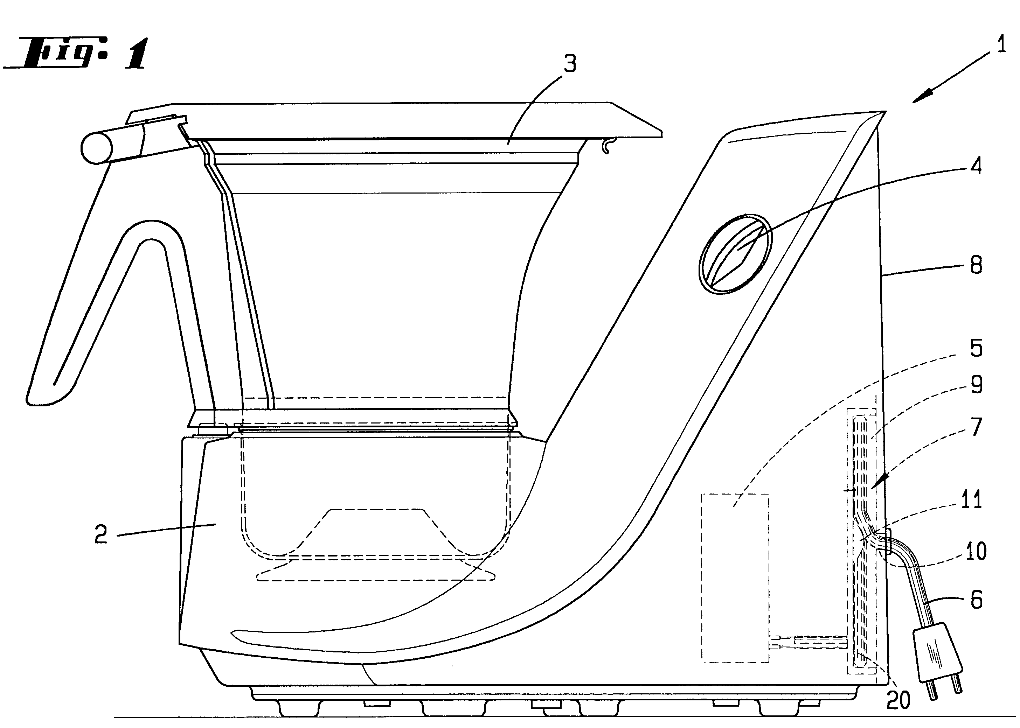

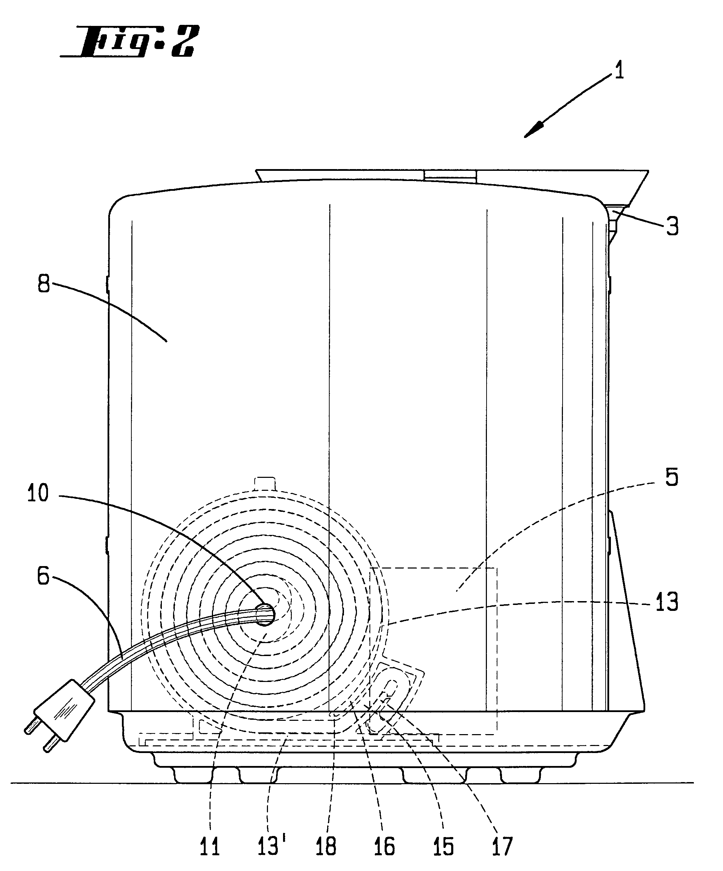

- Fig. 1: eine Seitenansicht einer Küchenmaschine mit der Kabelaufnahme;
- Fig. 2: eine Rückansicht der Küchenmaschine gemäß Fig. 1 im Bereich der Kabelaufnahme;
- Fig. 3: eine Draufsicht auf eine geöffnete Kabelaufnahme mit teilweise eingeführtem Kabel, eine erste Ausführungsform betreffend;
- Fig. 4: einen Querschnitt durch den Gegenstand gemäß Fig. 3, geschnitten entlang der Linie IV-IV;
- Fig. 5: eine perspektivische Darstellung des topfartigen Gehäuses der Kabelaufnahme;
- Fig. 6: eine der Fig. 3 entsprechende Darstellung, eine zweite Ausführungsform betreffend;
- Fig. 7: eine der Fig. 4 entsprechende Darstellung, ebenfalls die zweite Ausführungsform betreffend.

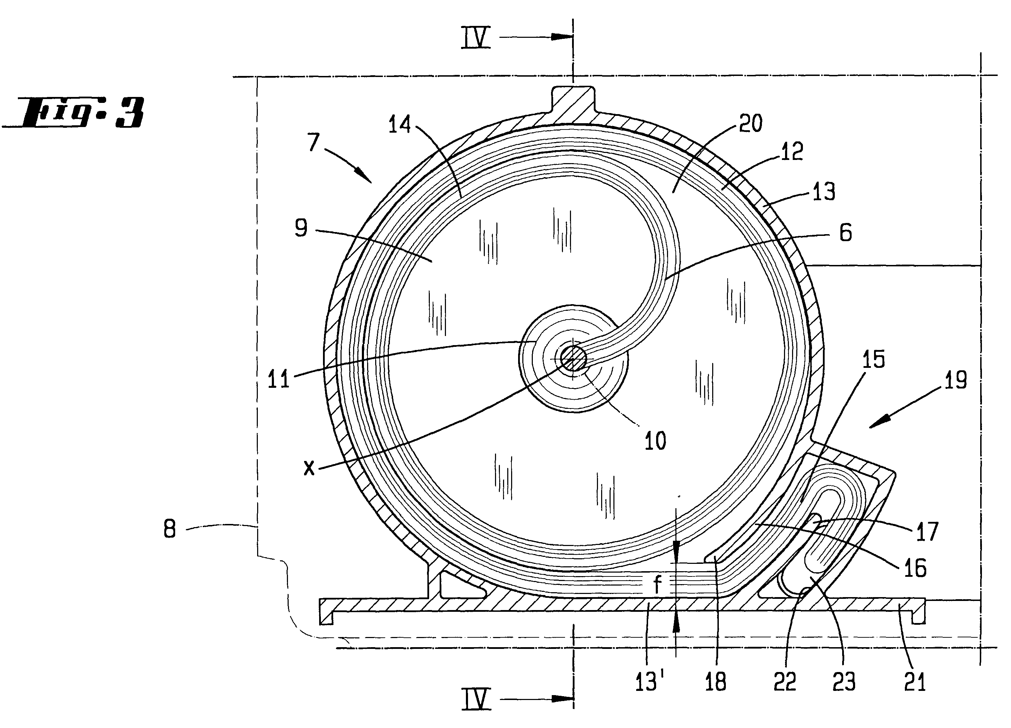

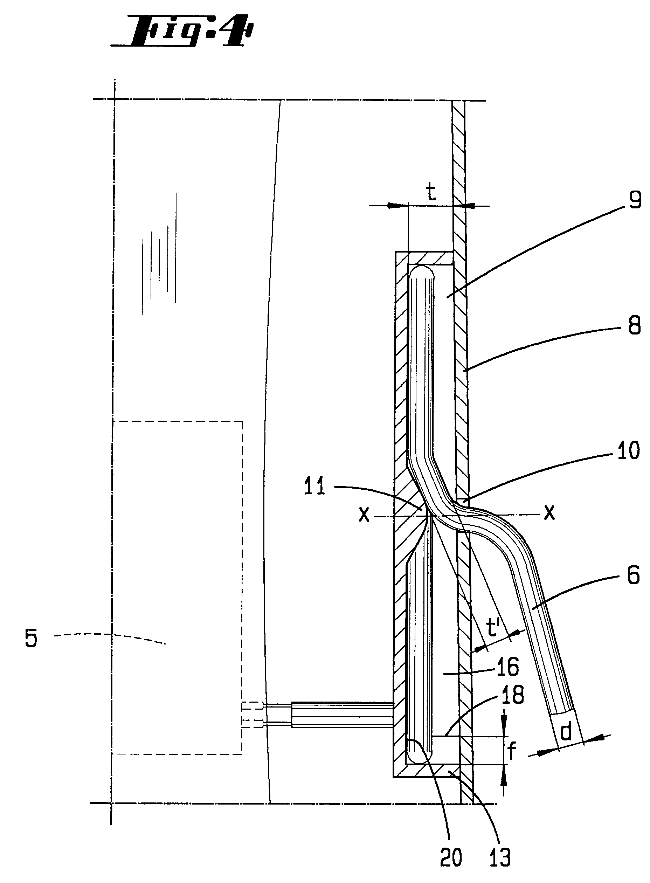

Dargestellt und beschrieben ist eine Küchenmaschine 1, die als sogenanntes Thermomixgerät ausgebildet ist. In einer Aufnahme 2 des Rührgefäßes 3 ist eine im einzelnen nicht dargestellte Heizeinrichtung ausgebildet, mit welcher der Bodenbereich des Rührgerätes 3 aufheizbar ist. Das Küchengerät 1 ist über verschiedene Schalter 4, von welche lediglich einer zur Illustration dargestellt ist, betätigbar. Im Inneren des Küchengerätes 1 sind elektrische Einrichtungen, insbesondere ein Elektromotor 5 angeordnet, welche hier auch nur schematisch angedeutet sind. Für ein Anschlußkabel 6 des Küchengerätes 1 ist eine Kabelaufnahme 7 vorgesehen, die unterhalb einer Rückwand 8 (vgl. auch Fig. 2) ausgebildet ist.

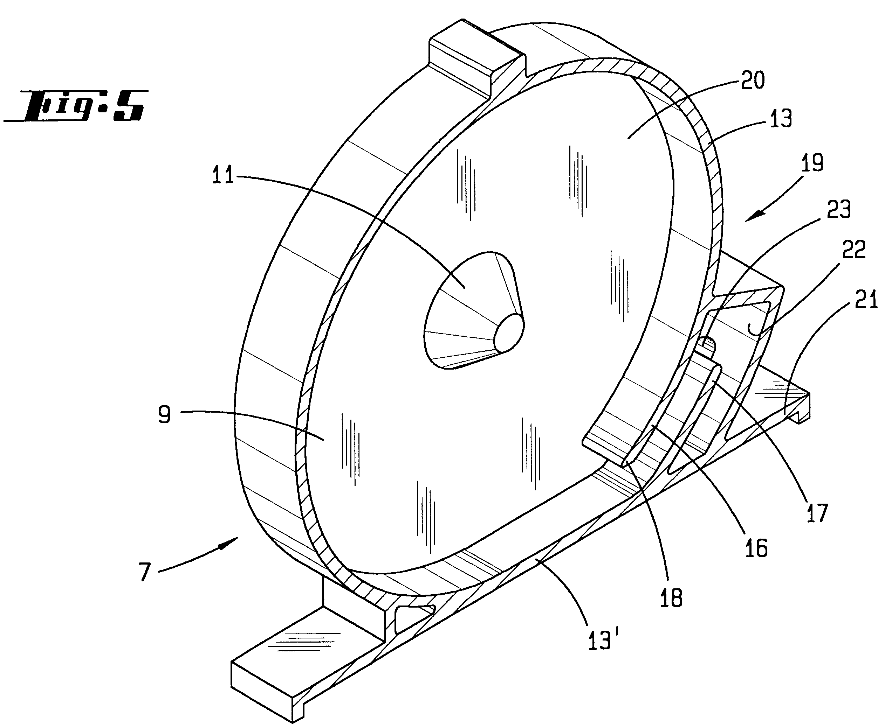

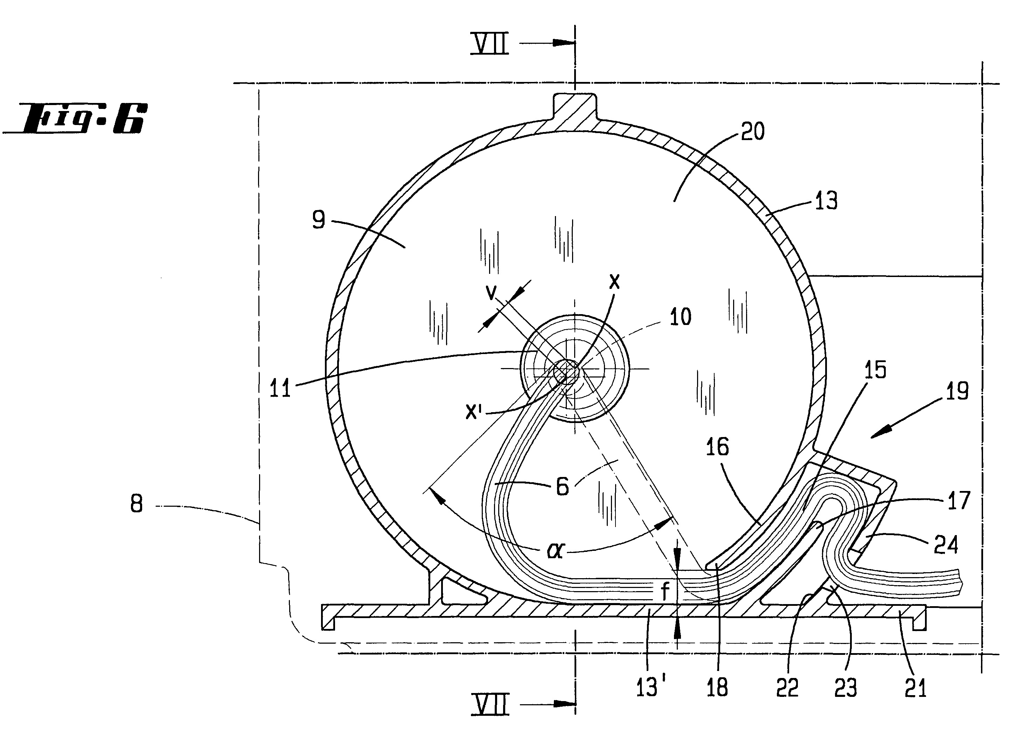

Mit Bezug zu den Fig. 3 bis 5 ist in einer ersten Ausführungsform zu erkennen, daß die Kabelaufnahme 7 einen scheibenartigen Hohlraum 9 aufweist, dessen Tiefe t geringer ist als ein zweifacher Durchmesser d des Anschlußkabels 6. In der Rückwand 8 des Küchengerätes 1 ist eine bezüglich des Hohlraums 9 der Kabelaufnahme 7 zentrale Öffnung 10 ausgebildet, über welche das Anschlußkabel 6 aus der Kabelaufnahme 7 herausziehbar oder in diese zurückführbar ist.

In der Kabelaufnahme 7 ist weiter zugeordnet zu der Öffnung 10 ein im wesentlichen kegelartiger Führungsstumpf 11 ausgebildet. Der Führungsstumpf 11 ist im einzelnen so gestaltet, daß eine höchste Erhebung oder auch eine obere Abflachung sich im Bereich der zentralen Öffnung 10 befindet. Durch den Führungsstumpf 11 wird die Tiefe t im Bereich der Öffnung 10 wesentlich verkleinert. Ein Maß t' entspricht nur noch wenig mehr als dem Durchmesser d des Anschlußkabels 6. Durch den Führungsstumpf 11 wird dem Anschlußkabel 6 beim Zurückführen in die Kabelaufnahme 7 ein Ausweichen in einer radialen Richtung bezüglich der zentralen Öffnung 10 vorgegeben. Wie aus Fig. 3 insbesondere zu ersehen ist, legt sich beim Zurückführen des Anschlußkabels 6 in die Kabelaufnahme 7 eine erste Windung 12 an einen schmalseitigen Rand 13 der Kabelaufnahme 7 an. Weiter nachfolgende Windungen 14 usw. legen sich dann spiralförmig nach innen folgend an die erste Windung 12 bzw. die zweite Windung 14 usw. an.

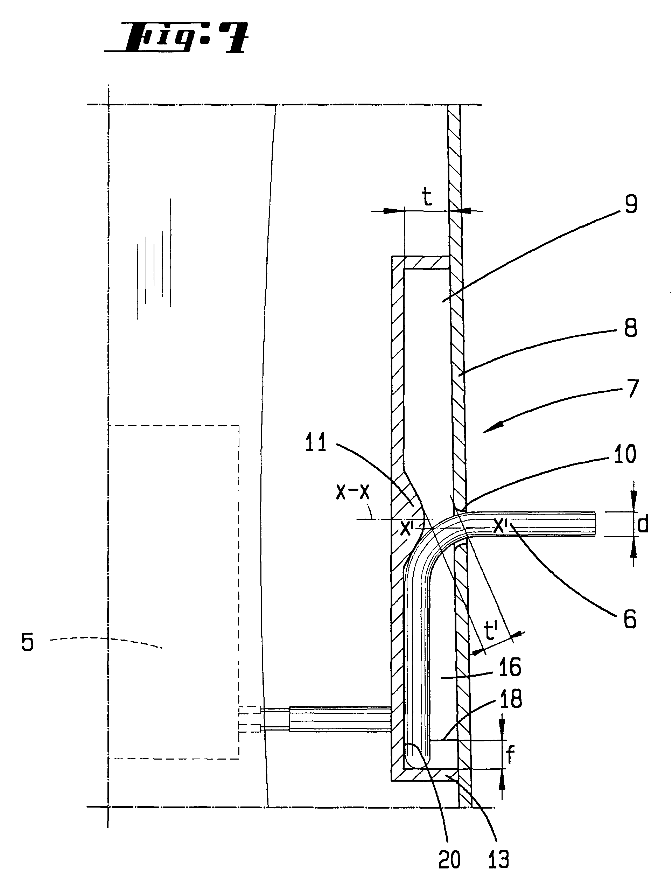

Wie insbesondere aus den Fig. 3 und 4 ersichtlich, bilden die Körperachse des Führungsstumpfes 11 und die Mittelachse der Öffnung 10 eine gemeinsame Aches x, wobei diese Achse x zentral in dem Hohlraum 9 der Kabelaufnahme 7 angeordnet ist.

Bei einem Herausziehen des Kabels 6 kann dieses soweit durchgeführt werden, bis ein Endbereich 15 erreicht ist. Durch die durch die Vorsprünge 16 bzw. 17 des Randbereichs 12 gegebene labyrinthartige Führung des Endbereiches 15 des Anschlußkabels 6 ist dieses zusätzlich gehaltert bzw. zugentlastet. Der Vorsprung 16 folgt innenseitig der vorgegebenen Krümmung des Randbereiches 13, beim Ausführungsbeispiel in Fortsetzung kreisförmig. Ein Ende 18 des Vorsprungs 16 ist so angeordnet, daß ein verbleibendes Freimaß f zwischen dem Randbereich 13 und dem Ende 18 kleiner ist als ein zweifacher Durchmesser d des Anschlußkabels 6. Der dem Ende 18 gegenüberliegende Randbereich 13' ist in Fortführung so gestaltet, daß er im wesentlichen gleichlaufend mit dem Vorsprung 16 sich entgegengesetzt, in Überlappung zu dem Vorsprung 16 erstreckt und in den Vorsprung 17 ausläuft. Wie der Darstellung gemäß Fig. 5 auch zu entnehmen ist, ist als Teil der Kabelaufnahme 7 ein insgesamt topfartiges Gehäuse 19 vorgesehen, das als Auflagefläche für das Anschlußkabel 6 einen Boden 20 aufweist und eine angeformte, sich hierzu im wesentlichen rechtwinklig erstreckende Randbegrenzung 13. Weiter ist der beschriebene Führungsstumpf 11 einstückig mit dem Gehäuse 19, speziell dem Boden 20 ausgebildet. Die wesentliche Grundform des Gehäuses 19 ist kreisförmig. Hiervon abweichend bzw. ergänzend ist an einer Seite eine Halterungsleiste 21 ausgebildet, die im wesentlichen tangential zu einer Randleiste 13 verläuft, sich jedoch in Projektion seitlich hierüber hinaus erstreckt. Einseitig bezüglich der grundsätzlichen Kreisform des Bodens 20 und in einem Zwickel bezüglich der Leiste 21 ist die bereits beschriebene labyrinthartige Führung für einen Endbereich des Anschlußkabels 6 vorgesehen. In einer hierdurch gebildeten hinteren Kammer 22 ist eine bodenseitige Öffnung 23 für eine Durchführung des Anschlußkabels 6 in das Innere des Küchengerätes 1 vorgesehen.

Im Einbauzustand, wie aus Fig. 4 auch ersichtlich, wirkt das topfartige Gehäuse 19 mit der Rückwand 8 des Küchengerätes 1 gleichsam als Deckel zusammen.

In den Fig. 6 und 7 ist ein zweites Ausführungsbeispiel der Kabelaufnahme 7 dargestellt. Im Gegensatz zum zuvor beschriebenen Ausführungsbeispiel sind hier die Körperachse des Führungsstumpfes 11 und die Mittelachse der Öffnung 10 versetzt angeordnet. Die Körperachse x des Führungsstumpfes 11 liegt weiterhin zentral zu dem Hohlraum 9. Die Mittelachse x' der Öffnung 10 ist um ein Maß v versetzt zu der Körperachse x in der Rückwand 8 der Küchenmaschine 1 angeordnet, wobei das Maß v etwa dem halben Durchmesser d des Kabels 6 entspricht. Mit Bezug zu Fig. 6 ist die Öffnung 10 um ca. 2 bis 3 mm nach unten, d. h. in Richtung auf dem schmalseitigen Randbereich 13' und um ca. 2 bis 3 mm seitlich zu der der Kammer 22 abgewandten Seite versetzt.

Wesentlich hierbei ist, daß bei einem vollständig herausgezogenen Kabel 6 - wie in Fig. 6 strichpunktiert dargestellt - ein Wiedereinführen des Kabels 6 derart erfolgt, daß das Kabel 6 über einen Winkelbereich Alpha über den Führungsstumpf 11 gleitet und in den Hohlraum 9 tritt. Bedingt durch den durch den Winkel Alpha gebildeten Eintrittsbereich ist ausgehend von der Situation eines vollständig herausgezogenen Kabels 6 die Spiralrichtung bei einem Wiedereinführen des Kabels 6 vorgegeben. Die Versetzung der Mittelachse x' zu der Körperachse x des Führungsstumpfes 11 ist so gewählt, daß bei einem Wiedereinführen des Kabels 6 dieses sich nach Austritt aus der Kammer 22 weich entlang des Randes 13 angelegt. Dies wiederum ist eine Vorgabe um eine geordnete Spirale bilden zu können. Letztere wird stets in gleicher Wickelrichtung gebildet. Im Bereich des freien Endes 18 des Vorsprunges 16 bilden sich aufgrund der versetzten Anordnung von Öffnung 10 und Führungsstumpf 11 keine Knickstellen des Kabels 6.

Weiter ist in dem zweiten Ausführungsbeispiel die Herausführung des Kabels 6 bzw. dessen Endbereiches 15 aus der Kammer 22 in Richtung auf den Elektromotor 5 alternativ ausgebildet. Hierzu ist die Öffnung 23 in einem Seitenwandbereich 24 der Kammer 22 vorgesehen (vgl. Fig. 6).

## Patentansprüche

1. Elektrogerät (1), bspw. Küchenmaschine, mit einem Anschlußkabel (6) und einer Kabelaufnahme (7), wobei das Kabel (6) über eine breitseitige, im wesentlichen zentrale Öffnung (10) aus der Kabelaufnahme (7) herausziehbar ist, **dadurch gekennzeichnet, daß** die Kabelaufnahme (7) einen scheibenartigen Hohlraum (9) aufweist, mit einer Tiefe (t), welche geringer ist als ein zweifacher Durchmesser (d) des aufzunehmenden Kabels (6).

2. Elektrogerät nach Anspruch 1, **dadurch gekennzeichnet, daß** in der Kabelaufnahme (7) zugeordnet zu der Öffnung (10), ein kegelartiger Führungsstumpf (11) ausgebildet ist.

3. Elektrogerät nach einem oder mehreren der vorhergehenden Ansprüche, **dadurch gekennzeichnet, daß** die Öffnung (10) zu dem Führungsstumpf (11) versetzt ist.

4. Elektrogerät nach einem oder mehreren der vorhergehenden Ansprüche, **dadurch gekennzeichnet, daß** ein Maß (v) der Versetzung etwa einem halben Kabeldurchmesser (d) entspricht.

5. Elektrogerät nach einem oder mehreren der vorhergehenden Ansprüche, **dadurch gekennzeichnet, daß** die Kabelaufnahme (7) an einem schmalseitigen Randbereich (13') eine Durchtrittsöffnung zur Durchführung des Kabels (6) in das Maschineninnere aufweist.

6. Elektrogerät nach einem oder mehreren der vorhergehenden Ansprüche, **dadurch gekennzeichnet, daß** die Kabelaufnahme eine bodenseitige Öffnung (23) für eine Dürchführung des Anschlußkabels (6) in das Innere des Küchengerätes (1) aufweist.

7. Elektrogerät nach einem oder mehreren der vorhergehenden Ansprüche, **dadurch gekennzeichnet, daß** das Anschlußkabel (6) benachbart zu der Öffnung (23) labyrinthartig geführt ist.

8. Elektrogerät nach einem oder mehreren der vorhergehenden Ansprüche, **dadurch gekennzeichnet, daß** die Versetzung zu der Seite des schmalseitigen Randbereiches (13') ausgebildet ist.

9. Elektrogerät nach einem oder mehreren der vorhergehenden Ansprüche, **dadurch gekennzeichnet, daß** die Kabelaufnahme (7) aus einem an einer Breitseite offenen, topfartigen Gehäuse (19) besteht, das im Einbauzustand durch eine Gehäusewand (8) des Elektrogerätes (1) abgedeckt ist.

10. Elektrogerät nach einem oder mehreren der vorhergehenden Ansprüche, **dadurch gekennzeichnet, daß** der Hohlraum (9) der Kabelaufnahme (7) eine runde oder ovale Umfangsbegrenzung aufweist.

## Claims

1. Electrical appliance (1), or kitchen appliance, with a connection cable (6) and a cable receptacle (7), the cable (6) being able to be pulled out from the cable receptacle (7) via a substantially central opening (10) in the broad side, **characterized in that** the cable receptacle (7) has a disc-like cavity (9), with a depth (t) which is less than twice the diameter (d) of the cable (6) to be received.

2. Electrical appliance according to Claim 1, **characterized in that** a conical guiding boss (11), associated with the opening (10), is formed in the cable receptacle (7).

3. Electrical appliance according to one or more of the preceding claims, **characterized in that** the opening (10) is offset in relation to the guiding boss (11).

4. Electrical appliance according to one or more of the preceding claims, **characterized in that** a measure (v) of the offset corresponds approximately to half a cable diameter (d).

5. Electrical appliance according to one or more of the preceding claims, **characterized in that** the cable receptacle (7) has at an edge region (13') on the narrow side a through-opening for the leading through of the cable (6) into the interior of the appliance.

6. Electrical appliance according to one or more of the preceding claims, **characterized in that** the cable receptacle has an opening (23) on the bottom side for leading through of the connection cable (6) into the interior of the kitchen appliance (1).

7. Electrical appliance according to one or more of the preceding claims, **characterized in that** the connection cable (6) is guided in a labyrinthine manner alongside the opening (23).

8. Electrical appliance according to one or more of the preceding claims, **characterized in that** the offset is formed to the side of the edge region (13') on the narrow side.

9. Electrical appliance according to one or more of the preceding claims, **characterized in that** the cable receptacle (7) comprises a pot-like housing (19) which is open on one broad side and, in the installed state, is covered by a housing wall (8) of the electrical appliance (1).

10. Electrical appliance according to one or more of the preceding claims, **characterized in that** the cavity (9) of the cable receptacle (7) has a round or oval peripheral delimitation.

## Revendications

1. Appareil électrique (1), par exemple un appareil de cuisine, avec un câble d'alimentation (6) et un logement de câble (7), le câble (6) étant extractible du logement de câble (7) par une ouverture (10) sensiblement centrale sur le côté large, **caractérisé en ce que** le logement de câble (7) présente une cavité (9) en forme de disque, avec une profondeur (t) qui est plus petite que deux fois le diamètre (d) du câble (6) à recueillir.

2. Appareil électrique selon la revendication 1, **caractérisé en ce que**, dans le logement de câble (7), un tronc de guidage (11) conique est agencé en correspondance avec l'ouverture (10).

3. Appareil électrique selon une ou plusieurs des revendications précédentes, **caractérisé en ce que** l'ouverture (10) est décalée par rapport au tronc de guidage (11).

4. Appareil électrique selon une ou plusieurs des revendications précédentes, **caractérisé en ce que** la dimension (v) du décalage correspond environ à un demi diamètre (d) de câble.

5. Appareil électrique selon une ou plusieurs des revendications précédentes, **caractérisé en ce que** le logement de câble (7) présente, dans une zone de paroi (13') latérale étroite, un trou de passage pour l'accès du câble (6) à l'intérieur de la machine.

6. Appareil électrique selon une ou plusieurs des revendications précédentes, **caractérisé en ce que** le logement de câble présente une ouverture (23) dans le fond pour le passage guidé du câble d'alimentation (6) à l'intérieur de l'appareil de cuisine (1).

7. Appareil électrique selon une ou plusieurs des revendications précédentes, **caractérisé en ce que** le câble d'alimentation (6) est guidé à proximité de l'ouverture (23) par un labyrinthe.

8. Appareil électrique selon une ou plusieurs des revendications précédentes, **caractérisé en ce que** le décalage est effectué du côté de la zone de paroi (13') latérale étroite.

9. Appareil électrique selon une ou plusieurs des revendications précédentes, **caractérisé en ce que** le logement de câble (7) comprend un boîtier (19) en forme de pot, ouvert, sur un côté large, boîtier qui est couvert en position montée par une paroi de boîtier (8) de l'appareil électrique (1).

10. Appareil électrique selon une ou plusieurs des revendications précédentes, **caractérisé en ce que** la cavité (9) du logement de câble (7) présente un pourtour ovale ou rond.
